Europäisches Patentamt

**European Patent Office**

Office européen des brevets

(11) Numéro de publication: **0 034 988**
**B1**

(12) **FASCICULE DE BREVET EUROPEEN**

(45) Date de publication du fascicule du brevet:
**18.04.84**

(21) Numéro de dépôt: **81400266.3**

(22) Date de dépôt: **20.02.81**

(51) Int. Cl.³: **H 04 L 27/14**

(54) Démodulateur pour modem à modulation de fréquence.

(30) Priorité: **26.02.80 FR 8004209**

(43) Date de publication de la demande:
**02.09.81 Bulletin 81/35**

(45) Mention de la délivrance du brevet:
**18.04.84 Bulletin 84/16**

(84) Etats contractants désignés:
**DE GB**

(56) Documents cités:
**GB - A - 2 000 662**

**IEEE NATIONAL TELECOMMUNICATIONS
CONFERENCE, vol. 1, 1975, New York, US D.D. BUSS et
al. "Communication applications of CCD transversal
filters", pages 1-1 à 1-5**

(73) Titulaire: **THOMSON-CSF, 173, Boulevard Haussmann,
F-75379 Paris Cedex 08 (FR)**

(72) Inventeur: **Picquendar, Jean-Edgar, THOMSON-CSF
SCPI 173, bld Haussmann, F-75360 Paris Cedex 08 (FR)**

(74) Mandataire: **Mayeux, Michèle et al, THOMSON-CSF
SCPI 173, Bld Haussmann, F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

ACTORUM AG

## Démodulateur pour modem à modulation de fréquence

La présente invention concerne un démodulateur pour modem à modulation de fréquence.

On rappelle qu'on désigne couramment sous le nom de modems, les modulateurs-démodulateurs qui comportent:

— un modulateur, qui convertit une suite aléatoire de signaux binaires égaux à 0 ou à 1 en un signal analogique périodique, modulé en fréquence, en amplitude ou en phase, et transmissible par le réseau téléphonique:

— un démodulateur, qui convertit le signal analogique modulé fourni par le réseau en une suite de 0 ou de 1.

La présente invention concerne les modems à modulation de fréquences qui sont connus sous le vocable anglo-saxon de Frequency Shift Keying ou F.S.K.

Dans les modems F.S.K., à un 0, le modulateur fait correspondre une sinusoïde à la fréquence $F_A$ et à un 1, le modulateur fait correspondre une sinusoïde à la fréquence $F_Z$.

Les spécifications du C.C.I.T.T. prévoient toutes les caractéristiques des modems, c'est ainsi qu'un modem à 1200 bauds a été étudié pour lequel $F_A$=2100 Hz et $F_Z$=1300 Hz. Ce modem fonctionne en duplex (c'est-à-dire en utilisant simultanément la même ligne) avec un autre modem à 75 bauds pour lequel $F_A$=450 Hz et $F_Z$=390 Hz.

Le modem à 1200 bauds sera cité à titre d'exemple dans ce qui suit.

On connaît dans l'art antérieur des démodulateurs pour modems à modulation de fréquences qui comportent d'abord un écrêteur du signal sinusoïdal reçu de la ligne téléphonique suivi par un registre à décalage qui impose un retard τ et par un dispositif qui assure la multiplication entre le signal directement issu de l'écrêteur et ce même signal retardé de τ.

Le retard τ est choisi tel que: $\Phi = \omega_c \cdot \tau = \pi/2$ avec $F_c = \omega_c/2\pi = F_A - f_0 = F_Z + f_0$.

Ainsi, à la sortie du dispositif de multiplication, les signaux à $F_A$ et à $F_Z$ sont superposés à des tensions continues égales mais de signes opposés, et il est facile de les détecter et de transformer le signal analogique reçu de la ligne en une suite de 0 et de 1.

Pour $F_A$=2100 Hz et $F_Z$=1300 Hz, la fréquence $F_c$ égale 1700 Hz et τ=150 μs.

Par la demande de brevet français Nᵒ 2414835, qui est le correspondant à la demande de brevet anglais Nᵒ 2000662 citée dans le rapport de recherche, on connaît un démodulateur qui comporte deux voies en parallèle sur lesquelles est simultanément envoyé un signal analogique à démoduler. Chaque voie comporte deux filtres transversaux en parallèle qui réalisent la convolution entre le signal d'entrée du filtre et la réponse impulsionnelle du filtre définie par ses coefficients de pondération en +1 et −1.

Le problème qui se pose est que ce démodulateur travaille sur des signaux sensiblement rectangulaires et obtenus par écrêtage de signaux sinusoïdaux, ce qui introduit un bruit supplémentaire et diminue les performances du démodulateur.

La présente invention permet de résoudre ce problème car elle concerne un démodulateur travaillant sur des signaux sinusoïdaux.

La présente invention concerne un démodulateur pour modem à modulation de fréquences, ce modem étant constitué d'un modulateur assurant la conversion d'une suite aléatoire de signaux binaires égaux à 0 ou à 1 en un signal analogique périodique à deux fréquences différentes, $F_A$ et $F_Z$, et d'un démodulateur assurant la conversion du signal analogique aux fréquences $F_A$ et $F_Z$, en une suite de 0 et de 1, ce démodulateur comportant deux voies en parallèle sur lesquelles est simultanément envoyé le signal analogique à démoduler et chaque voie comportant deux filtres transversaux en parallèle qui comportent un registre à décalage à n+1 étages et qui réalisent la convolution entre le signal d'entrée du filtre échantillonné et la réponse impulsionnelle du filtre définie par ses coefficients de pondération, caractérisé en ce que le signal analogique à démoduler est constitué de sinusoïdes à deux fréquences différentes $F_A$ et $F_Z$ et en ce que les coefficients de pondération $h_k$ des deux filtres de chaque voie sont des fonctions du produit ωpτ, $f_R$ (ωpτ) et $f_I$(ωpτ) avec:

— pour l'une des voies $\omega = \omega_A = 2\pi F_A$ et pour l'autre voie $\omega = \omega_Z = 2\pi F_Z$;

— τ, le retard avec lequel se fait le décalage d'un échantillon d'un étage du registre au suivant;

— p variant de 1 à n et n tel que nτ soit limité à la durée du baud du modem;

— avec d'autre part, pour $\omega_A$ ou $\omega_Z$ selon la voie, le maximum de $f_R$ (ωpτ) égal à celui de $f_I$ (ωpτ) et avec un déphasage $\pi/2$ entre $F_R$ et $f_I$ et en ce que un dispositif assure l'élévation au carré ou prend le module du signal issu de chaque filtre.

Le démodulateur selon l'invention présente de nombreux avantages parmi lesquels on peut citer:

— sa simplicité de réalisation;

— sa grande facilité d'intégration particulièrement dans le cas où les filtres sont des filtres à transfert de charges;

— ses performances élevées.

D'autres objets, caractéristiques et résultats de l'invention, ressortiront de la description suivante, donnée à titre d'exemple non limitatif et illustrée par les figures annexées qui représentent:

— les fig. 1 et 2, deux modes de réalisation du démodulateur selon l'invention;

— les fig. 3 et 4, un filtre transversal et un filtre transversal à transfert de charges susceptibles d'être utilisés dans le démodulateur selon l'invention.

Sur les différentes figures, les mêmes repères désignent les mêmes éléments, mais, pour des raisons de clarté, les cotes et proportions des divers éléments ne sont pas respectées.

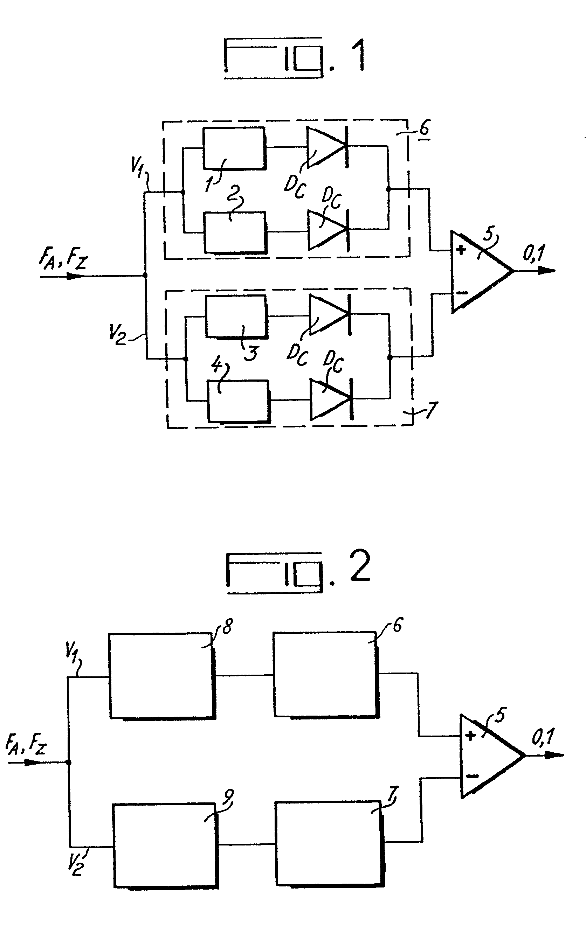

La fig. 1 représente le schéma d'un démodulateur selon l'invention.

Le démodulateur selon l'invention comporte deux voies $V_1$ et $V_2$ en parallèle sur lesquelles est simultanément envoyé le signal à démoduler qui est constitué de sinusoïdes à deux fréquences différentes $F_A$ et $F_Z$.

Sur chaque voie, on trouve deux filtres en parallèle qui sont repérés par 1 et 2 pour la voie $V_1$ et par 3 et 4 pour la voie $V_2$. Un dispositif $D_C$ assure l'élévation au carré ou prend le module du signal issu de chaque filtre. Ce dispositif peut être constitué de diodes et ce dispositif $D_C$ est représenté symboliquement par une diode sur la fig. 1.

Un amplificateur différentiel 5 reçoit sur son entrée positive le signal issu de la voie $V_1$ et sur son entrée négative le signal issu de la voie $V_2$. En sortie de l'amplificateur différentiel 5, on obtient deux types de signaux positifs ou négatifs qui permettent de détecter le signal d'entrée à la fréquence $F_A$ ou à la fréquence $F_Z$, et de transmettre ainsi des 0 ou des 1.

Sur chaque voie $V_1$ et $V_2$ on calcule l'amplitude, de la transformée de Fourier discrète du signal à démoduler, à la fréquence $F_A$ pour la voie $V_1$ par exemple, et à la fréquence $F_Z$ pour la voie $V_2$.

Lorsque le signal à démoduler est à la fréquence $F_A$, la voie $V_1$ fournit l'amplitude de la transformée de Fourier discrète à $F_A$ et la voie $V_2$ ne fournit qu'un signal de bruit de faible amplitude. En sortie de l'amplificateur différentiel 5, on détecte donc qu'une sinusoïde à la fréquence $F_A$ a été transmise à l'entrée du démodulateur et un 0 est transmis.

Lorsque le signal à démoduler est à la fréquence $F_Z$, la voie $V_2$ fournit l'amplitude de la transformée de Fourier discrète à $F_Z$. La fréquence $F_Z$ se trouve donc détectée et un 1 est transmis.

On rappelle que la transformée de Fourier $H(\omega)$ d'un signal fonction du temps f(t) s'écrit:

$$H(\omega) = \int_{-\infty}^{+\infty} f(t)e^{j\omega t}\, dt \text{ avec } e^{j\omega t} = \cos\omega t + j\sin\omega t,$$

ce qui permet d'écrire:

$$H(\omega) = \int_{-\infty}^{+\infty} f(t)\cos\omega t\, dt + j\int_{-\infty}^{+\infty} f(t)\sin\omega t\, dt.$$

Par ailleurs, la transformée de Fourier discrète de f(t) s'écrit:

$$(1)\ H(\omega) = \sum_{p=1}^{n} f(p\tau)\cdot\cos(\omega p\tau) + j\sum_{p=1}^{n} f(p\tau)\cdot\sin(\omega p\tau)$$

Dans le démodulateur selon l'invention, on calcule sur la voie $V_1$ l'amplitude de la transformée de Fourier discrète à la fréquence $F_A$ et sur la voie $V_2$ l'amplitude de la transformée de Fourier discrète à la fréquence $F_Z$, en utilisant sur chaque voie deux filtres transversaux en parallèle qui réalisent la convolution entre le signal d'entrée échantillonné $f(p\tau)$ et la réponse impulsionnelle du filtre définie par ses coefficients de pondération $h_k$.

On choisit donc pour les deux filtres transversaux 1 et 2, 3 et 4 utilisés sur chaque voie des coefficients de pondération en $\cos(\omega p\tau)$ pour l'un des filtres et en $\sin(\omega p\tau)$ pour l'autre filtre, avec $\omega = \omega_A = 2\pi F_A$ ou avec $\omega = \omega_Z = 2\pi F_Z$ selon la voie $V_1$ ou $V_2$.

Ces filtres transversaux comportent un registre à décalage à plusieurs étages et on appelle $\tau$ le retard avec lequel se fait le décalage d'un échantillon du signal d'entrée d'un étage du registre au suivant.

Par ailleurs, le temps $n\tau$ pendant lequel on relève des échantillons du signal d'entrée est limité à la durée du baud du modem qui comporte ce démodulateur.

On rappelle qu'on n'a pas le droit de transmettre sur la ligne deux transitions successives séparées par une durée inférieure à celle du baud.

Si on dispose d'un modem à k bauds, la valeur du baud égale l/k. Ainsi, dans le cas d'un modem à 1200 bauds, on n'a pas le droit de transmettre sur la ligne deux transitions successives séparées par moins de 1 baud=1/1200=833 µs.

En limitant à la durée du baud le temps $n\tau$, on réduit au maximum le risque de relever des échantillons du signal à démoduler à deux fréquences différentes $F_A$ et $F_Z$.

La transformée de Fourier discrète de f(t) (1) est de la forme A+jB. On obtient donc l'amplitude $A^2+B^2$ de la transformée de Fourier discrète de f(t) en faisant suivre chaque filtre 1, 2, 3 et 4 d'un dispositif $D_C$ qui assure l'élévation au carré du signal issu du filtre. Il est également possible de prendre le module des signaux issus des filtres 1, 2, 3 et 4.

La fig. 2 représente un autre mode de réalisation du démodulateur selon l'invention.

Dans ce mode de réalisation, on trouve sur chaque voie $V_1$ et $V_2$, précédant les dispositifs 6 et 7 constitués respectivement des filtres 1 et 2 et des filtres 3 et 4 associés aux dispositifs $D_c$, un filtre repéré par 8 pour la voie $V_1$ et par 9 pour la voie $V_2$.

Les filtres 8 et 9, comme les filtres 1, 2, 3 et 4, sont des filtres transversaux qui réalisent la convolution entre leur signal d'entrée échantillonné et leur réponse impulsionnelle définie par les coefficients de pondération de chaque filtre.

Les filtres 8 et 9 présentent la particularité d'avoir un 0 à la fréquence $F_Z$ pour le filtre 8 qui est sur la voie $V_1$, et un 0 à la fréquence $F_A$ pour le filtre 9 qui est sur la voie $V_2$.

Cela signifie que la transformée en z du signal de sortie de ces filtres s'annule pour la valeur que prend z à $F_Z$ pour le filtre 8 et s'annule pour la valeur que prend z à $F_A$ pour le filtre 9.

A la sortie du filtre 8, la fréquence $F_Z$ est éliminée et le dispositif 6 sélectionne la fréquence $F_A$. De même, à la sortie du filtre 9 la fréquence $F_A$ est éliminée et le dispositif 7 sélectionne la fréquence $F_Z$.

On peut aussi adapter les filtres 1, 2, 3 et 4, de façon que les filtres 1 et 2 présentent un 0 à $F_Z$ et les filtres 3 et 4 présentent un 0 à $F_A$.

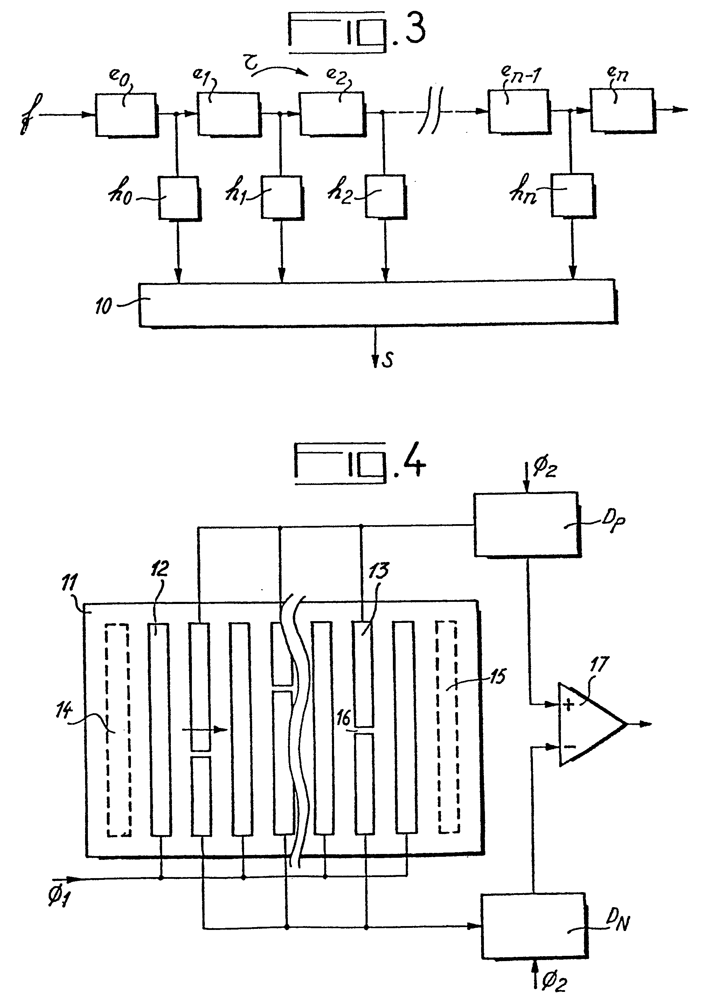

Les fig. 3 et 4 représentent le schéma de principe d'un filtre transversal et un filtre transversal à transfert de charges susceptibles d'être utilisés dans les démodulateurs selon l'invention.

Le filtre représenté sur la fig. 3 comporte un registre à décalages constitué de n+1 étages $e_o$ à $e_n$. Le filtre reçoit un signal d'entrée échantillonné $f(t)$. Le décalage d'un échantillon du signal d'entrée d'un étage du registre au suivant se fait avec un retard $\tau$.

Le signal de sortie du filtre, S, est constitué par la somme, réalisée par un dispositif de sommation 10, à un même instant t, des signaux pris sur chaque étage et affectés d'un coefficient de pondération $h_o$, $h_1$, $h_2$...$h_k$...$h_n$. Le signal de sortie S égale donc:

$$S = \sum_{p=1}^{n} f(p\tau) \cdot h_p.$$

Ce filtre transversal peut être un filtre numérique ou un filtre à transfert de charges.

Dans le cas du filtre numérique, on entre dans un registre à décalage à une fréquence $1/\tau$, la valeur codée en numérique d'échantillons du signal d'entrée. Chaque échantillon passe d'un étage du registre au suivant à une fréquence $1/\tau$. On effectue n+1 multiplications entre le contenu de chaque étage et un coefficient de pondération $h_o$...$h_n$ contenu dans une mémoire. La somme du résultat de ces n+1 multiplications donne en numérique le signal filtré.

La fig. 4 donne le schéma d'un filtre transversal à transfert de charges du type C.C.D. (Charge Coupled Device), mais des filtres transversaux à transfert de charges du type B.B.D. (Bucket Brigade Device) peuvent aussi être utilisés.

Les filtres à transfert de charges, qui sont bien connus de l'art antérieur, sont constitués par un substrat semi-conducteur recouvert d'une couche isolante 11 sur laquelle alternent des électrodes de transfert 12 et des électrodes de stockage des charges 13, disposées perpendiculairement au sens de transfert des charges indiqué par une flèche.

Aux deux extrémités du dispositif, deux diodes 14 et 15 assurent respectivement l'injection dans le substrat de charges électriques, qui sont les porteurs minoritaires du substrat, et l'évacuation de ces charges.

Sur application aux électrodes de transfert et de stockage de signaux d'horloge $\Phi_1$ et $\Phi_2$, de même période mais en opposition de phase, il y a transfert de charges d'une électrode de stockage à la suivante.

Pour qu'il y ait continuité des potentiels créés dans le substrat semi-conducteur sous les électrodes et pour qu'il y ait un sens de transfert des charges unique, on dispose les électrodes de stockage sur une surépaisseur d'isolant.

Cette surépaisseur d'isolant peut être remplacée par un surdopage du substrat par implantation d'ions qui assure les mêmes fonctions.

De même, la description est faite dans le cas de dispositifs à transfert de charges à deux phases $\Phi_1$ et $\Phi_2$, mais l'invention s'applique aussi bien aux dispositifs à transfert de charges à trois phases, par exemple, qui comportent deux électrodes de transfert de charges, entre chaque électrode de stockage.

Les électrodes de stockage 13 sont séparées en au moins deux parties par une coupure 16 disposée selon la direction de transfert des charges.

Lors de l'arrivée des charges sous une électrode de stockage, les charges stockées sous chaque partie de cette électrode sont lues par un dispositif de lecture des charges $D_P$ et $D_N$, comme cela est représenté sur la fig. 4.

Les dispositifs de lecture des charges $D_P$ et $D_N$ sont reliés à un amplificateur différentiel 17 qui permet d'obtenir un signal pondéré positivement ou négativement selon la position de la coupure 16.

Les dispositifs de lecture des charges en courant ou en tension sont bien connus de l'art antérieur, notamment par la demande de brevet français Nº 2389899 au nom de Thomson-CSF.

Les filtres transversaux à transfert de charges comportent donc un registre à décalages constitué d'électrodes de transfert 12 et d'électrodes de stockage 13.

Chaque étage de ce registre comporte une électrode de stockage 13 séparée en deux parties par une coupure 16 et une ou plusieurs électrodes de transfert 12.

Dans le cas du mode de réalisation du démodulateur selon l'invention représenté sur la fig. 2 où les coefficients de pondération sont en cos $(\omega p\tau)$ pour l'un des filtres 1, 2, 3 et 4, de chaque voie et en sin $(\omega p\tau)$ pour l'autre filtre, on doit ajouter des 0 à la fonction de transfert en z des filtres 8 et 9 pour éliminer les fréquences élevées.

Par ailleurs, il est possible d'obtenir l'amplitude de la transformée de Fourier discrète aux fréquences $F_A$ et $F_Z$ autrement qu'en utilisant des filtres ayant des coefficients de pondération en cos$(\omega p\tau)$ et en sin $(\omega p\tau)$.

Il suffit en effet que les coefficients de pondération des filtres 1 et 2, et 3 et 4 de chaque voie soient des fonctions du produit $\omega p\tau$, soit $f_R$ $(\omega p\tau)$ et $f_I$ $(\omega p\tau)$, avec pour $\omega_A$ ou $\omega_Z$ selon la voie:
— un déphasage de $\pi/2$ entre $f_R$ et $f_I$;
— le maximum de $f_R$ $(\omega p\tau)$ égal à celui de $f_I$ $(\omega p\tau)$.

Dans une première solution, pour obtenir le déphasage de $\pi/2$ entre $f_R$ et $f_I$, les coefficients de pondération des deux filtres de chaque voie sont établis en choisissant une fonction de transfert en z quelconque P(z) pour l'un des filtres et en prenant pour fonction de transfert de l'autre filtre de la voie P(z) $(1-z)$.

Enfin, les coefficients de pondération sont normalisés pour que les maximums soient égaux.

Dans une deuxième solution, les coefficients de pondération des deux filtres de chaque voie sont obtenus en prenant pour l'un des filtres une fonction de transfert en z, P $(z)$ qui comporte des coefficients de pondération symétriques, deux à deux, mis à part le coefficient central si le nombre de coefficients est impair comme cela est connu pour que le filtre ne présente pas de distorsion de temps de groupe. L'autre filtre de la même voie a une fonction de transfert en z, Q(z) $(1-z)$, où Q(z) est une fonction, de transfert en z qui comporte le même nombre de coefficients de pondération que $P(z)$, ces coefficients étant symétriques deux à deux et différents des coefficients de $P(z)$.

Dans ce cas également, les coefficients de pondération des deux filtres de chaque voie sont normalisés pour que les maximums soient égaux.

Pour réaliser les filtres 1, 2, 3 et 4, il est intéressant de limiter à 3 le nombre d'électrodes de stockage de l'un des filtres de chaque voie, les filtres 1 et 3 par exemple. Dans ce cas, l'autre filtre de chaque voie comporte 4 électrodes de stockage dont les coupures sont positionnées en fonction du résultat de la multiplication par $(1-z)$ de la fonction de transfert des filtres 1 et 3 ou d'une autre fonction de transfert à 3 coefficients comme il a été vu précédemment.

La précision obtenue avec ce nombre limité d'électrodes de stockage est suffisante. La surface de silicium est diminuée et la vitesse de transition se trouve augmentée.

Ainsi par exemple, dans le cas où les filtres 1 et 2 présentent en plus un 0 à $F_Z$ et où les filtres 3 et 4 présentent en plus un 0 à $F_A$, on peut choisir pour le filtre 1 la fonction de transfert en z suivante, où $F_H$ est la fréquence d'horloge des filtres à transfert de charges.

$$1-2 \cos\left(2\pi \frac{F_Z}{F_H}\right) \cdot z + z^2$$

Le filtre 2 a alors la fonction de transfert en z suivante :

$$\left(1-2 \cos\left(2\pi \frac{F_Z}{F_H}\right) \cdot z + z^2\right) \cdot Q,$$

et la constante $Q$ est choisie telle que l'on ait :

$$\left| 1-2 \cos\left(2\pi \frac{F_Z}{F_H}\right) \cdot e^{-j2\pi \frac{F_A}{F_H}} + e^{-2j2\pi \frac{F_A}{F_H}} \right| =$$

$$\left| 1-2 \cos\left(2\pi \frac{F_Z}{F_H}\right) \cdot e^{-j2\pi \frac{F_A}{F_H}} + e^{-2j2\pi \frac{F_A}{F_H}} \right|$$

$$\cdot \left| 1-e^{-j2\pi \frac{F_A}{F_H}} \right| \cdot Q$$

En ce qui concerne les filtres 3 et 4, on peut choisir pour le filtre 3 la fonction de transfert en z suivante :

$$1-2 \cos\left(2\pi \frac{F_A}{F_H}\right) \cdot z + z^2$$

Le filtre 4 a alors une fonction de transfert égale à celle du filtre 3 multipliée par $(1-z) \cdot Q'$, la constante $Q'$ étant choisie pour que les sorties des filtres 3 et 4 aient même amplitude à $F_Z$.

Pour que le retard dû aux filtres 1 et 2 (ou 3 et 4) soit identique, on peut réaliser ces filtres sur le même substrat semi-conducteur en intercalant leurs électrodes de stockage et en commençant par une électrode du filtre ayant le plus grand nombre d'électrodes de stockage.

On utilise alors un dispositif de lecture propre aux électrodes de chaque filtre, mais un seul injecteur des charges et un seul dispositif de conversion des charges en tension. Il faut aussi que le transfert d'une électrode de stockage à la suivante se fasse deux fois plus vite que lorsque les filtres sont réalisés sur des substrats séparés.

Il serait de même possible d'intercaler sur le même substrat les électrodes des quatre filtres 1, 2, 3 et 4.

Le dispositif représenté sur la fig. 2 peut être également utilisé comme discriminateur de fréquence.

Il faut alors adapter les caractéristiques des dispositifs 5 et 6 pour obtenir en sortie de l'amplificateur différentiel 5 une courbe de réponse en fonction de la fréquence sensiblement linéaire de $F_A$ à $F_Z$ et qui en particulier s'annule sensiblement pour la fréquence centrale de $F_A$ et $F_Z$, $F_C$.

## Revendications

1. Démodulateur pour modem à modulation de fréquences, ce modem étant constitué d'un modulateur assurant la conversion d'une suite aléatoire de signaux binaires égaux à 0 ou à 1 en un signal analogique périodique à deux fréquences différentes, $F_A$ et $F_Z$, et d'un démodulateur assurant la conversion du signal analogique aux fréquences $F_A$ et $F_Z$, en une suite de 0 et de 1, ce démodulateur comportant deux voies en parallèle ($V_1$, $V_2$) sur lesquelles est simultanément envoyé le signal analogique à démoduler et chaque voie comportant deux filtres transversaux (1 et 2, 3 et 4) en parallèle qui comportent un registre à décalages à $m+1$ étages et qui réalisent la convolution entre le signal d'entrée du filtre échantillonné et la réponse impulsionnelle du filtre définie par ses coefficients de pondération, caractérisé en ce que le signal analogique à démoduler est constitué de sinusoïdes à deux fréquences différentes $F_A$ et $F_Z$, et en ce que les coefficients de pondération ($h_k$) des deux filtres de chaque voie sont des fonctions du produit $\omega p\tau$, $f_R(\omega p\tau)$ et $f_I(\omega p\tau)$ avec:

— pour l'une des voies $\omega = \omega_A = 2\pi F_A$ et pour l'autre voie $\omega = \omega_Z = 2\pi F_Z$;

— $\tau$, le retard avec lequel se fait le décalage d'un échantillon d'un étage du registre au suivant:

— $p$ variant de 1 à n et n tel que n $\tau$ soit limité à la durée du baud du modem;

— avec d'autre part, pour $\omega_A$ ou $\omega_Z$ selon la voie, le maximum de $f_R(\omega p\tau)$ égal à celui de $f_I(\omega p\tau)$ et avec un déphasage de $\pi/2$ entre $f_R$ et $f_I$ et en ce que un dispositif ($D_C$) assure l'élévation au carré ou prend le module du signal issu de chaque filtre.

2. Démodulateur selon la revendication 1, caractérisé en ce qu'un amplificateur différentiel (5) reçoit le signal issu des deux voies et fournit le signal de sortie du démodulateur.

3. Démodulateur selon l'une des revendications 1 ou 2, caractérisé en ce que $f_R(\omega p\tau)$ et $f_I(\omega p\tau)$ sont des fonctions cosinus et sinus.

4. Démodulateur selon l'une des revendications 1 ou 2, caractérisé en ce que les coefficients de pondération des deux filtres de chaque voie sont obtenus en choisissant une fonction de transfert en z P(z) quelconque pour l'un des filtres et en prenant pour fonction de transfert de l'autre filtre de la voie P(z). (1−z).

5. Démodulateur selon l'une des revendications 1 ou 2, caractérisé en ce que les coefficients de pondération des deux filtres de chaque voie sont obtenus en choisissant pour l'un des filtres une fonction de transfert en zP(z), qui comporte des coefficients de pondération symétriques deux à deux mis à part le coefficient central s'il existe, et en choisissant pour l'autre filtre de la même voie une fonction de transfert en zQ(z)·(1−z), où Q(z) est une fonction de transfert en z comportant le même nombre de coefficients que P(z), également symétriques deux à deux et différents des coefficients de P(z).

6. Démodulateur selon l'une des revendications 4 ou 5, caractérisé en ce que les coefficients de pondération des deux filtres de chaque voie sont normalisés pour que leurs maximums, aux fréquences $F_A$ ou $F_Z$ selon la voie, soient égaux.

7. Démodulateur selon l'une des revendications 1 à 6, caractérisé en ce que les filtres transversaux (1 et 2, 3 et 4) sont des filtres transversaux à transfert de charges.

8. Démodulateur selon l'une des revendications 1 à 6, caractérisé en ce que les deux filtres (1 et 2, 3 et 4) de chaque voie sont réalisés sur le même substrat semi-conducteur où leurs électrodes de stockage sont intercalées, le transfert des charges d'une électrode de stockage à la suivante se faisant deux fois plus vite que lorsque les filtres sont réalisés sur des substrats séparés.

9. Démodulateur selon l'une des revendications 1 à 8, caractérisé en ce que chaque voie comporte un filtre transversal (8, 9), qui réalise la convolution entre son signal d'entrée échantillonné et la réponse impulsionnelle du filtre définie par ses coefficients de pondération qui est placé avant les deux filtres en parallèle (1 et 2, 3 et 4), chaque filtre (8, 9) possédant un 0 à la fréquence $F_A$ pour la voie où $\omega=\omega_z$ et à la fréquence $F_Z$ pour la voie où $\omega=\omega_A$ et comportant également des 0 destinés à éliminer les fréquences élevées.

10. Démodulateur selon l'une des revendications 1 à 8, caractérisé en ce que les deux filtres en parallèle (1 et 2, 3 et 4) de chaque voie ($V_1$, $V_2$) possèdent un 0 à la fréquence $F_A$ pour la voie ($V_2$) où $\omega=\omega_z$ et à la fréquence $F_Z$ pour la voie ($V_1$) où $\omega=\omega_A$.

## Patentansprüche

1. Demodulator für einen Frequenzmodulationsmodem, der gebildet ist aus einem Modulator, welcher die Umsetzung einer willkürlichen Folge von Binärsignalen, die gleich 0 oder 1 sind, in ein periodisches Analogsignal mit zwei verschiedenen Frequenzen $F_A$ und $F_Z$ gewährleistet, und aus einem Demodulator, welcher die Umsetzung des Analogsignals mit den Frequenzen $F_A$ und $F_Z$ in eine Folge von 0 und 1 gewährleistet, wobei dieser Demodulator zwei parallele Zweige ($V_1$, $V_2$) umfasst, auf die das zu modulierende Signal gleichzeitig gegeben wird, wobei jeder Zweig zwei Transversalfilter (1 und 2, 3 und 4) umfasst, die parallel liegen und ein Schieberegister mit n+1-Stufen umfassen sowie die Faltung zwischen dem getasteten Eingangssignal des Filters und der Impulsantwort des Filters bilden, die durch seine Wichtungskoeffizienten definiert ist, dadurch gekennzeichnet, dass das zu demodulierende Analogsignal aus Sinusschwingungen mit zwei verschiedenen Frequenzen $F_A$ und $F_Z$ gebildet ist, und dass die Wichtungskoeffizienten ($h_k$) der beiden Filter jedes Zweiges Funktionen des Produktes $\omega p\tau$, $f_R$ ($\omega p\tau$) und $f_I$ ($\omega p\tau$) sind, mit:

— für einen der Zweige: $\omega=\omega_A=2\pi F_A$; und für den anderen Zweig: $\omega=\omega_Z=2\pi F_Z$;

— $\tau$ gleich der Verzögerung, mit der die Verschiebung einer Abtastprobe von einer Stufe des Registers zur nächsten erfolgt;

— p zwischen 1 und n variierend und n derart, dass $n\tau$ auf die Dauer des Baud des Modems begrenzt ist;

— wobei andererseits je nach dem Zweig für $\omega_A$ oder $\omega_Z$ das Maximum von $f_R$ ($\omega p\tau$) gleich demjenigen von $f_I$ ($\omega p\tau$) ist, mit einer Phasenverschiebung von $\pi/2$ zwischen $f_R$ und $f_I$, und dass eine Vorrichtung ($D_C$) die Quadrierung des von jedem Filter abgegebenen Signals oder die Betragbildung dieses Signals gewährleistet.

2. Demodulator nach Anspruch 1, dadurch gekennzeichnet, dass ein Differenzverstärker (5) das von den beiden Zweigen abgegebene Signal empfängt und das Ausgangssignal des Demodulators liefert.

3. Demodulator nach einem der Ansprüche 1 oder 2, dadurch gekennzeichnet, dass $f_R$ ($\omega p\tau$) und $f_1$ ($\omega p\tau$) Kosinus- und Sinusfunktionen sind.

4. Demodulator nach einem der Ansprüche 1 oder 2, dadurch gekennzeichnet, dass die Wichtungskoeffizienten der zwei Filter jedes Zweiges erhalten werden, indem eine beliebige z-Übertragungsfunktion P(z) für eines der Filter gewählt wird und als Übertragungsfunktion P(z) für eines der Filter gewählt wird und als Übertragungsfunktion des anderen Filters des Zweiges P(z)·(1−z) genommen wird.

5. Demodulator nach einem der Ansprüche 1 oder 2, dadurch gekennzeichnet, dass die Wichtungskoeffizienten der zwei Filter jedes Zweiges erhalten werden, indem für eines der Filter eine z-Übertragungsfunktion P(z) gewählt wird, die zwei zu zwei symmetrische Wichtungskoeffizienten umfasst, abgesehen von dem zentralen Koeffizienten, wenn dieser vorhanden ist, und indem für das andere Filter desselben Zweiges eine z-Übertragungsfunktion Q(z)·(1−z) gewählt wird, worin Q(z) eine z-Übertragungsfunktion ist, welche dieselbe Anzahl von Koeffizienten wie P(z) enthält, die ebenfalls zwei zu zwei symmetrisch und von den Koeffizienten von P(z) verschieden sind.

6. Demodulator nach einem der Ansprüche 4 oder 5, dadurch gekennzeichnet, dass die Wichtungskoeffizienten der zwei Filter jedes Zweiges so normalisiert sind, dass ihre Maxima bei den Frequenzen $F_A$ oder $F_Z$, je nach dem Zweig, gleich sind.

7. Demodulator nach einem der Ansprüche 1 bis 6, dadurch gekennzeichnet, dass die Transversalfilter (1 und 2, 3 und 4) transversale Ladungsüberführungsfilter sind.

8. Demodulator nach einem der Ansprüche 1 bis 6, dadurch gekennzeichnet, dass die beiden Filter (1 und 2, 3 und 4) jedes Zweiges auf demselben Halbleitersubstrat verwirklicht sind, wo ihre Speicherelektroden verschachtelt sind, wobei die Ladungsüberführung von einer Speicherelektrode zur nächsten doppelt so schnell wie bei auf getrennten Substraten verwirklichten Filtern geschieht.

9. Demodulator nach einem der Ansprüche 1 bis 8, dadurch gekennzeichnet, dass jeder Zweig ein Transversalfilter (8, 9) umfasst, welches die Faltung zwischen seinem getasteten Eingangssignal und der durch seine Wichtungskoeffizienten definierten Impulsantwort des Filters bildet, welches vor den beiden parallel liegenden Filtern (1 und 2, 3 und 4) liegt, wobei jedes Filter (8, 9) eine Nullstelle aufweist, und zwar bei der Frequenz $F_A$ für den Zweig, wo $\omega = \omega_Z$, und bei der Frequenz $F_Z$ für den Zweig, wo $\omega = \omega_A$, und ferner Nullstellen enthält, welche dazu bestimmt sind, die hohen Frequenzen zu eliminieren.

10. Demodulator nach einem der Ansprüche 1 bis 8, dadurch gekennzeichnet, dass die beiden parallel liegenden Filter (1 und 2, 3 und 4) jedes Zweiges ($V_1$, $V_2$) eine Nullstelle aufweisen, und zwar bei der Frequenz $F_A$ für den Zweig ($V_2$), wo $\omega = \omega_Z$, und bei der Frequenz $F_Z$ für den Zweig ($V_1$), wo $\omega = \omega_A$.

## Claims

1. Demodulator for a frequency modulation modem, said modem being constituted by a modulator which ensures the conversion of an arbitrary sequence of binary signals equal to 0 or 1 to a periodic analog signal having two different frequencies $F_A$ and $F_Z$ to a sequence of 0 and 1, said demodulator comprising two parallel branches ($V_1$, $V_2$) to which the signal to be modulated is passed simultaneously, each branch comprising two transverse filters (1 and 2, 3 and 4) in parallel which comprise a shift register with $n+1$ stages and form the convolution between the sampled input signal of the filter and the pulse response of the filter defined by its weighting coefficients, characterized in that the analog signal to be demodulated is formed by sine waves having two different frequencies $F_A$ and $F_Z$ and that the weighting coefficients ($h_k$) of the two filters of each branch are functions of the product $\omega p \tau$, $f_R$ ($\omega p \tau$), and $f_I$ ($\omega p \tau$) with-

— for one of the branches $\omega = \omega_A = 2\pi F_A$ and for the other branch $\omega = \omega_Z = 2\pi F_Z$;

— $\tau$, the delay with which the shift of a sample from one stage of the register to the next takes place;

— p varies between 1 and n and n in such a manner that $n\tau$ is limited to the duration of the baud of the modem;

— with on the other hand for $\omega_A$ or $\omega_Z$, in dependence upon the branch, the maximum of $f_R$ ($\omega p \tau$) equal to that of $f_I$ ($\omega p \tau$), and with a phase displacement of $\pi/2$ between $f_R$ and $f_I$, and that a means ($D_C$) ensures the squaring or formation of the absolute value of the signal emitted by each filter.

2. Demodulator according to Claim 1, characterized in that a differential amplifier (5) receives the signal emitted by the two branches and furnishes the output signal of the demodulator.

3. Demodulator according to Claim 1 or 2, characterized in that $f_R$ ($\omega p \tau$) and $f_I$ ($\omega p \tau$) are cosine and sine functions.

4. Demodulator according to Claim 1 or 2, characterized in that the weighting coefficients of the two filters of each branch are obtained by selecting any z transfer function P(z) for one of the filters and taking as transfer function of the other filter of the branch $P(z) \cdot (1 - z)$.

5. Demodulator according to Claim 1 or 2, characterized in that the weighting coefficients of the two filters of each branch are obtained by selecting for one of the filters a z transfer function P(z) which comprises two to two symmetrical weighting coefficients apart from the central coefficient when the latter is present and by selecting for the other filter of the same branch a z transfer function $Q(z) \cdot (1 - z)$, where Q(z) is a z transfer function containing the same number of coefficients as P(z), likewise symmetrical two to two and different from the coefficients of P(z).

6. Demodulator according to Claim 4 or 5, characterized in that the weighting coefficients of the two filters of each branch are normalized so that their maxima at the frequencies $F_A$ or $F_Z$, depending on the branch, are equal.

7. Demodulator according to one of Claims 1 to 6, characterized in that the transverse filters (1 and 2, 3 and 4) are transverse charge transfer filters.

8. Demodulator according to one of Claims 1 to 6, characterized in that the two filters (1 and 2, 3 and 4) of each branch are realized on the same semiconductor substrate where their storage electrodes are interlaced, the charge transfer from one storage electrode to the next being effected twice as rapidly as when the filters are realized on separate substrates.

9. Demodulator according to one of Claims 1 to 8, characterized in that each branch comprises a transverse filter (8, 9) which forms a convolution between its sampled input signal and the pulse response of the filter defined by its weighting coefficients, which is located in front of the two filters (1 and 2, 3 and 4) in parallel, each filter (8, 9) having a 0 at the frequency $F_A$ for the branch where $\omega = \omega_Z$ and at the frequency $F_Z$ for the branch where $\omega = \omega_A$ and comprising likewise zeros intended to eliminate the high frequencies.

10. Demodulator according to one of Claims 1 to 8, characterized in that the two filters (1 and 2, 3 and 4) in parallel of each branch ($V_1$, $V_2$) have a 0 at the frequency $F_A$ for the branch ($V_2$) where $\omega = \omega_Z$ and at the frequency $F_Z$ for the branch ($V_1$) where $\omega = \omega_A$.

Fig. 1

Fig. 2

FIG.3

FIG.4